# EUROPÄISCHE PATENTSCHRIFT

(11) **EP 1 616 820 B1**
(45) Veröffentlichungstag und Bekanntmachung des Hinweises auf die Patenterteilung: **16.07.2008**
(21) Anmeldenummer: 05011826.4
(22) Anmeldetag: 01.06.2005
(51) Int. Cl.: B65G 27/02, B65G 27/08, B65G 27/30

(54) **Vibrationswendelförderer**
Spiral vibratory conveyor
Convoyeur hélicoidal à vibrations

(30) Priorität: 15.07.2004 DE 102004034482
(43) Veröffentlichungstag der Anmeldung: 18.01.2006
(73) Patentinhaber: Feintool International Holding, 3250 Lyss (CH)
(72) Erfinder: Kumeth, Sigmund, 92280 Kastl (DE)
(74) Vertreter: Blaumeier, Jörg

(56) Entgegenhaltungen:
- EP-A- 0 644 134
- AT-B- 360 906

## Beschreibung

Die Erfindung betrifft einen Vibrationswendelförderer, bestehend aus einem Schwingsystem mit einer Nutzmasse und einer Gegenmasse, die über wenigstens eine Antriebseinrichtung in eine gegenläufige oszillierende Drehschwingbewegung um eine mittige Drehachse bringbar sind, wobei die Nutz- und die Gegenmasse über um die Drehachse verteilt angeordnet Federanordnungen bezüglich einander bewegbar gelagert sind, wobei Teil der Nutzmasse ein lösbar angeordneter, austauschbarer Topf ist.

Solche Vibrationswendelförderer dienen dazu, Bauteile, die als ungeordnete Menge in den Topf eingebracht sind, längs einer vornehmlich an der Topfinnenwand ausgebildeten Förderwendel zu fördern und gegebenenfalls nach vorheriger während der Bewegung gegebener Orientierung einer Verarbeitung zuzuführen, beispielsweise einer Arbeitsstation und einer Fertigungs- oder Montageeinrichtung. Ein gattungsgemäßer Vibrationswendelförderer ist aus EP 0 644 134 B1 bekannt. Zur Erzeugung der die Bauteilbewegung verursachenden Topfbewegung ist ein Schwingsystem vorgesehen, das zwei bezüglich einander gegenläufig oszillierend bewegte Massen, nämlich eine Nutzmasse und eine Gegenmasse aufweist. Die Nutz- und die Gegenmasse werden über eine Antriebseinrichtung, vornehmlich einen elektromagnetischen Antrieb, gegenläufig zueinander bewegt. Aufgrund dieser gegenläufigen Massebewegung wird eine Übertragung von Vibrationen auf einen Maschinentisch oder ein Maschinengestell, an dem der Wendelförderer vorgesehen ist, weitestgehend ausgeglichen.

Um einen Vibrationswendelförderer flexibel einsetzen zu können ist es aus EP 0 644 134 B1 bekannt, den Topf auszutauschen. Mit dem Austausch des Topfes, der Teil der Nutzmasse ist, ändern sich aber zumeist die Massenverhältnisse, was in einer Änderung des Schwingverhaltens und mithin der Schwingungsdämpfung aufgrund der gegengleich bewegten Massen resultiert. Mit dem Austausch des Topfes geht auch eine Änderung des Massenträgheitsmoments der Nutzmasse einher.

Um diesem Problem zu begegnen ist aus EP 0 644 134 B1 ein Vibrationswendelförderer beziehungsweise ein Vibrationswendelförderer-System mit mehreren Töpfen bekannt, bei dem der Massen- beziehungsweise der Trägheitsmomentenabgleich entweder über eine an der Gegenmasse je nach verwendetem Topf anzubringende Hilfsmasse erfolgt oder - gegebenenfalls auch zusätzlich - durch eine Änderung beziehungsweise Einstellung der Federcharakteristik beziehungsweise Federkonstanten der der Nutzmasse zugeordneten Federanordnungen derart, dass bei dem jeweils verwendeten Topf die Eigenfrequenz der Nutzmasse gleich der Eigenfrequenz der Gegenschwingmasse ist. Bei einem Wechsel des Topfes sind also aufwendige Neueinstellungen durch Anbringen oder entfernen von Masseteilen im Bereich der Gegenmasse oder durch Anbringen oder Entfernen einzelner Blattfedern der Federanordnungen zum Variieren der Federeigenschaften erforderlich. Infolgedessen ist ein Topfwechsel nur mit hohem Arbeits- und Zeitaufwand möglich und auch nur von geschultem Personal durchführbar.

Der Erfindung liegt deshalb die Aufgabe zugrunde, einen Vibrationswendelförderer beziehungsweise ein Vibrationswendelförder-System umfassend zusätzlich mehrere Austauschtöpfe anzugeben, bei dem ein flexibler Topfwechsel ohne zusätzliche Einstell- oder Abgleichmaßnahmen möglich ist.

Zur Lösung dieses Problems ist bei einem Vibrationswendelförderer beziehungsweise einem mehrere hergerichtete Töpfe umfassenden System vorgesehen, dass die Massenträgheitsmomente der Nutz- und der Gegenmasse in einem definierten Verhältnis zueinander stehen und ein im Austausch anbringbarer Topf derart ausgelegt ist, dass das Massenträgheitsmoment der Nutzmasse und damit das Verhältnis der Massenträgheitsmomente im Wesentlichen unverändert bleibt.

Der Erfindung liegt die Erkenntnis zugrunde, dass - anders als bisher angenommen - für einen möglichst störschwingungsfreien, gedämpften Betrieb des Förderers die Massenträgheitsmomente beziehungsweise die Momentenverhältnisse der Nutz- und der Gegenmasse zueinander die zentrale Rolle spielen, während die Identität der Massen dem gegenüber eine untergeordnete Rolle spielt. Beim erfindungsgemäßen Vibrationswendelförderer ist infolgedessen ein vorbestimmtes Verhältnis der Massenträgheitsmomente der Nutz- und der Gegenmasse vorgesehen, das auch bei einem Austausch eines Topfes bis auf geringe Toleranzen beibehalten bleibt, also nicht verändert wird. Zu diesem Zweck ist jeder systemeigene Topf, der mit dem Schwingsystem gekoppelt werden kann, hinsichtlich seines topfeigenen Massenträgheitsmoments derart ausgelegt, dass das gesamte Massenträgheitsmoment der gesamten Nutzmasse im Wesentlichen gleich bleibt und daraus resultierend auch das Momentenverhältnis nach wie vor dem vorbestimmten Verhältnis entspricht. Das heißt, die Trägheitseigenschaften des gesamten Schwingsystems bleiben trotz Topfwechsels unverändert.

Den Topfwechsel kann folglich auch ein Laie vornehmen, nachdem jeder systemeigene und verwendbare Topf von Haus aus hinsichtlich seines Trägheitsmoments abgeglichen ist. Die Momentenverhältnisse am Schwingsystem sind standardisiert, weshalb ein standardisierte Antriebseinheit verwendet werden kann. Der Wechsel kann schnell vonstatten gehen, irgendwelche weiteren Einstellungen oder Abgleiche sind aufgrund der stets gleichen Verhältnisse nicht mehr erforderlich. Die gesamte Massenlagerung über die Federanordnungen bleibt dem zufolge trotz Topfwechsel unberührt, das heißt, Änderungen an den Federanordnungen oder dergleichen sind nicht vonnöten.

Auch eine Änderung oder ein Abgleich der Massen ist, sofern sich die Nutzmassenveränderungen, die sich durch einen Topfaustausch ergeben, in gewissen Grenzen halten, nicht erforderlich, nachdem wie beschrieben zentraler bestimmender Parameter das Verhältnis der Trägheitsmomente, nicht aber das der Massen ist. Vornehmlich sind die für einen Vibrationswendelförderer beziehungsweise sein Schwingsystem vorgesehenen, anbringbaren Töpfe derart konzipiert, dass sich ihre Massen nur unwesentlich unterscheiden. Um jedoch zu einer noch weitergehenden Optimierung des Schwing- und auch des Dämpfungsverhaltens zu gelangen, ist es zweckmäßig, wenn auch die Gewichte der Nutz- und auch der Gegenmasse im Wesentlichen gleich sind und ein im Austausch anbringbarer Topf derart ausgelegt ist, dass das Gewicht der Nutzmasse im Wesentlichen unverändert bleibt. Das heißt, dass bei einem Topfwechsel nicht nur das dynamische Trägheitsmoment der Nutzmasse, sondern auch das Gewicht der Nutzmasse annähernd unverändert bleibt. Das heißt, beim Topfaustausch ändern sich die Verhältnisse der Trägheitsmomente und der Massen nicht oder nur in einem relativ engen, vorgegebenen Toleranzbereich.

Die Nutz- und die Gegenmasse sind bevorzugt gleich groß, stehen also im Verhältnis 1:1. Dementsprechend können auch die Massenträgheitsmomente gleich groß sein, so dass sich auch hier ein Verhältnis von 1:1 ergibt. Denkbar ist es aber auch, das trotz Topfwechsels gleichbleibende Massenträgheitsmoment der Nutzmasse etwas größer als das der Gegenmasse auszulegen, um im Betrieb mit der Eigenfrequenz der oszillierenden Drehschwingung des Topfes in einen Bereich zu kommen, der relativ nah an der Betriebsfrequenz der Versorgungsspannung liegt, um hierdurch eine bessere und schnellere Förderung über den Topfantrieb zu erzielen.

Insgesamt bietet der erfindungsgemäße Vibrationswendelförderer und das Vibrationswendelförder-System umfassend die mehreren hinsichtlich des Trägheitsmoments und gegebenenfalls der Massen abgeglichenen Töpfe die Möglichkeit eines sehr schnellen und flexiblen Topfwechsels ohne umständliche Abgleichstätigkeiten, nachdem der Momenten- und Massenabgleich automatisch durch den entsprechend vorab hinsichtlich der vorbestimmten Momenten- und Massenverhältnisse abgeglichenen Topf erfolgt.

Der Umstand, dass beim Topfwechsel keinerlei Veränderungen seitens der Antriebseinheit enthaltend die Gegenmasse und einen Teil der Nutzmasse vorzunehmen sind, ermöglicht es, erfindungsgemäß eine standardisierte Antriebseinheit zu verwenden, umfassend eine Basis, ein mit dieser über Federanordnungen gekoppeltes Gegenschwingteil sowie ein mit ihr über Federanordnungen gekoppeltes, mit dem Topf bewegungsgekoppeltes Befestigungsteil, und die zwischen dem Gegenschwingteil und dem Befestigungsteil wirkende elektromagnetische Antriebseinrichtung umfassend mehrere Antriebsmodule, von denen je ein erstes Antriebsteil an dem Gegenschwingteil und ein zweites Antriebsteil an dem Befestigungsteil angeordnet ist, wobei das Befestigungsteil und das zweite Antriebsteil Teil der Nutzmasse sind und das Gegenschwingteil und das erste Antriebsteil im Wesentlichen die Gegenmasse bilden.

Es kommt eine für den jeweiligen Vibrationswendelförderertyp beziehungsweise das typenspezifische System ausgelegte standardisierte Antriebseinheit zum Einsatz, die werkseitig vorgefertigt und eingestellt ist und im Betrieb trotz Topfwechsels nicht mehr zu ändern ist. Die Antriebseinheit umfasst wie beschrieben die gesamte Gegenmasse bestehend aus dem Gegenschwingteil sowie dem ersten Antriebsteil, die im Wesentlichen die Gegenmasse bilden, wobei selbstverständlich Teil der Gegenmasse auch entsprechende Befestigungsmittel wie Schrauben etc. sind, die jedoch zwangsläufig einzusetzen sind. Die Nutzmasse ist ebenfalls zum Teil in der standardisierten Antriebseinheit enthalten, und zwar in Form des Befestigungsteils, das ein- oder mehrteilig sein kann, und das der Aufnahme des Topfes dient beziehungsweise mit diesem bewegungsgekoppelt ist und an dem das zweite Antriebsteil eines jeweiligen Antriebsmoduls vorgesehen ist, sowie gegebenenfalls nötige Befestigungsmittel wie Schrauben etc. Die beiden Antriebsteile sind bei elektromagnetischen Antrieben in Form eines Elektromagneten und eines Magnetankers ausgeführt. Die gesamte Antriebseinheit kann nun als vorgefertigtes Standardbauteil für den jeweiligen Typ oder das typenspezifische System gefertigt und gegebenenfalls auch gekapselt werden, nachdem dortseits keinerlei Anpassungen oder Abgleiche vorzunehmen sind. Die verwendbaren Töpfe sind auf die Eigenschaften der standardisierten Antriebseinheit abgestellt. Es wird also quasi eine Art Baukastensystem angegeben, mit eben der standardisierten Antriebseinheit und zugeordneten verwendbaren Töpfen, die je nach Bedarf auf die zu fördernden Gegenstände abgestellt sind. Es können leistungsmäßig unterschiedliche Typen von Antriebseinheiten vorgesehen werden, die unterschiedliche Massen- und Momentenbereiche abdecken. Für den Anwender besteht so die Möglichkeit, innerhalb einer größeren Palette den für seinen Zweck optimierten Antrieb wählen zu können und gleichzeitig die Möglichkeit zur breiten Variation der damit bearbeitbaren Bauteile zu haben.

Für optimierte Schwingeigenschaften ist es zweckmäßig, wenn die jeweiligen Massenträgheitsmomente und gegebenenfalls auch die Gewichte der Nutz- und der Gegenmasse, unter Berücksichtigung der Eigenschaften der Federanordnungen, also vornehmlich der Federkonstanten der Blattfedern, derart gewählt sind, dass die Resonanzfrequenz der oszillierenden Drehschwingbewegung gleich oder größer als die Betriebsfrequenz der die vorzugsweise elektromagnetische Antriebseinrichtung treibenden Versorgungsspannung ist. Bevorzugt wird der Vibrationswendelförderer so betrieben, dass die Resonanz- beziehungsweise Eigenfrequenz des Schwingsystems, die eine Funktion der dynamischen Trägheitsmomente und mithin des Verhältnisses der Trägheitsmomente der beiden Massen und der Federcharakteristik der Federanordnung ist, möglichst nah an der Frequenz des Antriebs, beispielsweise der Netzfrequenz einer mit dieser Frequenz betriebenen elektromagnetischen Antriebsanordnung ist. Dabei sollte die Eigenfrequenz bevorzugt größer als die Betriebsfrequenz sein, das heißt, das Schwingsystem wird unterkritisch betrieben, so dass sich die Masse des Förderguts nicht nachteilig auf das Schwingverhalten des Vibrationswendelförderers auswirkt.

Die Anpassung beziehungsweise der Abgleich eines Topfes insbesondere hinsichtlich des Massenträgheitsmoments kann durch die Form oder Geometrie des Topfes und damit die Verteilung der Masse bezogen auf den Radius des in der Regel querschnittlich runden Topfes erfolgen. Über die Wandstärke, das Material etc. kann auch ein Abgleich der Topfmasse erfolgen. Besonders zweckmäßig aber ist es, wenn zur Einstellung des topfeigenen Massenträgheitsmoments und/oder des Topfgewichts für eine Anpassung an das fixe Massenträgheitsmoment und/oder Gewicht der Nutzmasse am Topf ein oder mehrere Augleichsgewichte angebracht oder anbringbar sind. Ein bezüglich einer standardisierten Angriffseinheit zu verwendender Topf kann auf diese Weise relativ einfach eingestellt werden. Hierzu ist lediglich unter Verwendung einer geeigneten Messeinrichtung das topfspezifische Trägheitsmoment zu ermitteln und anschließend zum Momentenausgleich das oder die Augleichsgewichte am Topf anzubringen. Auf diese Weise sind hinsichtlich der Fertigungstechnik der Töpfe keine allzu geringen Toleranzen zu berücksichtigen, nachdem diese im Rahmen der genauen Justage ohne weiteres ausgeglichen werden können.

Zu diesem Zweck sind zweckmäßigerweise an der Topfaußenseite ein oder mehrere Aufnahmen vorgesehen, an oder in denen das oder die Ausgleichsgewichte angebracht oder anbringbar sind. Die Befestigung kann dabei in definierten Positionen erfolgen. Das heißt, am Umfang bevorzugt in einer gemeinsamen Ebene sind mehrere in ihrer Position definierte Aufnahmen vorgesehen, an denen Ausgleichsgewichte beispielsweise festgeschraubt werden können. Eine Aufnahme kann beispielsweise als eine Innengewindebohrung ausgeführt sein.

Alternativ ist es auch denkbar, die Aufnahme als umlaufende Nut auszubilden, in der die Ausgleichsgewichte in einer beliebigen Position angebracht werden können, beispielsweise durch Klemmbefestigungen etc.. Wichtig ist jedoch, dass die Ausgleichsgewichte stets mit symmetrischer Teilung zur Mittelachse angeordnet sind, also mit einer Teilung von 180°, 120°, 90° etc., je nachdem, wie viele Ausgleichsgewichte anzuordnen sind. Dabei ist ein Ausgleichsgewicht zweckmäßigerweise als der Form der Topfaußenseite beziehungsweise der Nut angepasstes Ringsegment definierter Form und Gewicht ausgebildet. Unter Verwendung dieser Ausgleichsgewichte ist es darüber hinaus denkbar, nicht nur einen systemspezifischen Topf abzugleichen, sondern auch den Topf anwenderseitig bezüglich eines nächst höheren Systems, das einen stärkeren Antrieb besitzt, hinsichtlich des Trägheitsmoments wie auch des Gewichts anzuheben oder bezüglich eines leistungsschwächeren Antriebs zu erniedrigen. Dies ist insbesondere dann möglich, wenn die Ausgleichsgewichte über eine lösbare Verbindung wie eine Schraub- oder Klemmverbindung gehaltert sind. Alternativ ist aber auch eine Klebe- oder eine Schweiß- oder eine Lötverbindung zur Gewichtsbefestigung denkbar.

Neben der Verwendung von Zusatzgewichten, die am Topf befestigt werden, ist es denkbar, die Einstellung des topfeigenen Massenträgheitsmoments und/oder des Topfgewichts für eine Anpassung an das fixe Massenträgheitsmoment und/oder das Gewicht der Nutzmasse über einen Materialabtrag vom oder einen Materialauftrag auf den Topf zu realisieren. Das heißt, der hergestellte Topf wird zunächst hinsichtlich seines Ist-Moments vermessen und anschließend entweder Material abgenommen, beispielsweise durch Abdrehen oder Abfräsen, wenn der Topf zu schwer oder das Moment zu groß ist. Umgekehrt ist es beispielsweise denkbar, das Moment oder Gewicht z.B. durch Anschweißen von Zusatzgewichten zu erhöhen.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: einen erfindungsgemäßen Vibrationswendelförderer mit aufgesetztem Topf,
- Fig. 2: eine Perspektivdarstellung der Antriebseinheit des Förderers aus Fig. 1,
- Fig. 3: eine Schnittdarstellung durch die Antriebseinheit aus Fig. 2,
- Fig. 4: die ungeschnittene Antriebseinheit,
- Fig. 5: eine Prinzipdarstellung im Schnitt eines erfindungsgemäßen Topfes zur Darstellung der Halterung von Ausgleichsgewichten,
- Fig. 6: eine Prinzipdarstellung eines anbringbaren Ausgleichsgewichts, und
- Fig. 7: eine Prinzipdarstellung der Anordnungen von Aufnahmen zur Ausgleichsgewichthalterung an der Topfaußenseite.

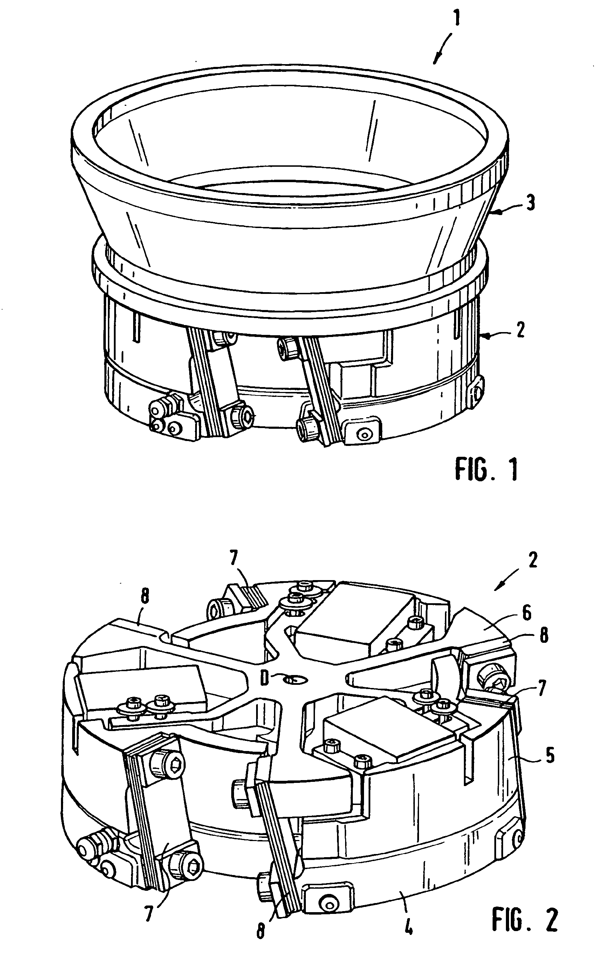

Fig. 1 zeigt einen erfindungsgemäßen Vibrationswendelförderer 1, bestehend aus einer standardisierten Antriebseinheit 2 und einem unter Verwendung von Befestigungselementen mit der Antriebseinheit 2 verbundenen Topf 3. Über die Antriebseinheit 2 ist der Topf 3 zur Förderung von in ihm befindlichen Kleinbauteilen, die längs einer nicht näher gezeigten Förderwendel an der Topfinnenwand durch vibrationsbedingt erzeugte Mikrowürfe gefördert werden, bewegbar.

Zu diesem Zweck besteht die Antriebseinheit 2 aus einem Basisteil 4, an dem über entsprechende Federanordnungen zum einen ein Gegenschwingteil 5, zum anderen ein Befestigungsteil 6 angeordnet sind. Das Gegenschwingteil 5 ist über Federanordnungen 7 in Form von Blattfederpaketen federnd mit dem Basisteil 4 verbunden, wobei im gezeigten Ausführungsbeispiel 3 solche Federanordnungen im Winkelabstand von 120° bezüglich der Drehachse D, die gleichzeitig die Mittelachse darstellt, vorgesehen sind. Entsprechend ist das Befestigungsteil 6 über Federanordnungen 8, auch hier Blattfederpakete, die 120° zueinander beabstandet sind, mit dem Basisteil 4 verbunden. Das Befestigungsteil 6 ist im gezeigten Teil sternförmig ausgebildet und greift quasi in das Gegenschwingteil 5 ein beziehungsweise ist in diesem aufgenommen. Während des Betriebs schwingen das Gegenschwingteil 5 und das Befestigungsteil 6 gegengleich zueinander um die Drehachse D, das heißt, sie vollführen eine oszillierende Drehschwingbewegung. Diese wird über eine Antriebseinrichtung 9 umfassend mehrere Antriebsmodule 10 erwirkt, die elektromagnetisch arbeiten und einen Magnetkern 11 umfassen, der am Gegenschwingteil 5 befestigt ist und mit diesem schwingt, sowie einen Magnetanker 12, der dem Magnetkern 11 gegenüber liegt und an dem Befestigungsteil 6, mit diesem schwingend, angeordnet ist. Die Antriebseinrichtung 9 wird über eine geeignete Versorgungsspannung, vornehmlich Netzspannung, betrieben, so dass sich eine von der Netzfrequenz sowie dem Massen- und Trägheitsverhältnissen abhängige Schwingfrequenz einstellt, mit welcher die relevanten Massen bezüglich einander schwingen.

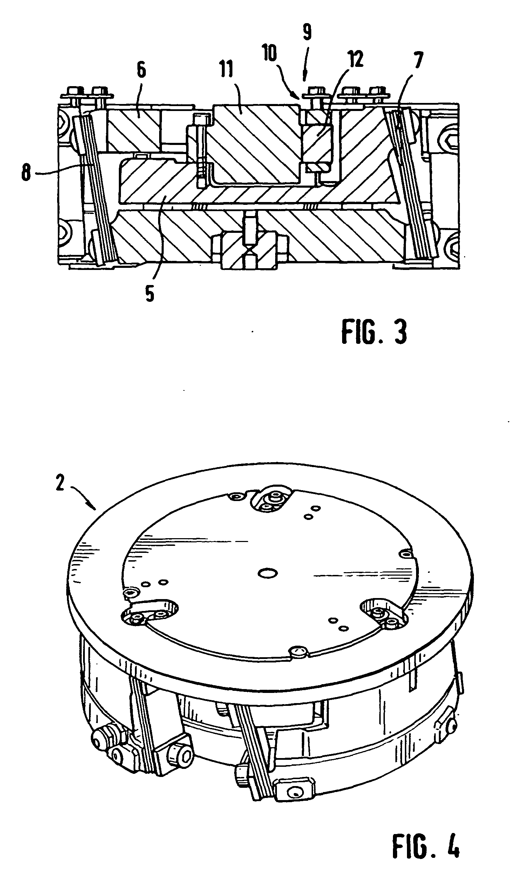

Bei diesen Massen handelt es sich um eine Gegenmasse und eine Nutzmasse. Die Gegenmasse wird im gezeigten Ausführungsbeispiel im Wesentlichen von dem Gegenschwingteil 5 sowie den an ihm befindlichen Magnetkernen 11 (zuzüglich entsprechender Befestigungsmittel wie Schrauben etc.) gebildet. Die Nutzmasse wird zum Teil von dem Befestigungsteil 6 (das oberseitig wie in Fig. 4 gezeigt plattenartig ausgebildet ist, und die Auflagefläche für den Topf 3 bildet) sowie den drei Magnetankern 12 und den entsprechenden Befestigungsmitteln gebildet.

Sowohl die Gegenmasse wie auch die Nutzmasse besitzen jeweils in ihrer Gesamtheit ein bestimmtes Gewicht, nämlich das Gegenmassengewicht G_{G} und das Nutzmassengewicht G_{N}. Ferner besitzt jede Masse ein massenspezifisches Massenträgheitsmoment, nämlich das Gegenmassenmoment M_{G} und das Nutzmassenmoment M_{N}. Um einen Wechsel eines Topfes 3 ohne einen aufwendigen Abgleich des Massenträgheitsmoments aufgrund einer Momentenänderung durch den neuen Topf vornehmen zu müssen ist vorgesehen, dass ein auf die Antriebseinheit 2 aufsetzbarer Topf so ausgeführt beziehungsweise bereits werkseitig abgeglichen ist, dass das Massenträgheitsmoment M_{N} der Nutzmasse bei Aufsetzen jedes für das System vorgesehenen Topfes im Wesentlichen unverändert bleibt, abgesehen von geringen Toleranzen im Bereich weniger Prozent um den vorbestimmten Momentenwert. Das Massenträgheitsmoment der Gegenmasse bleibt unangetastet und weitestgehend konstant.

Bevorzugt gilt entsprechendes auch bezüglich der Massengewichte. Das Gesamtgewicht G_{N} der Nutzmasse bleibt bei Aufsetzen jedes der dem System zugeordneten Töpfe im Wesentlichen unverändert, abgesehen auch hier von geringen Toleranzen. Das Gewicht G_{G} der Gegenmasse bleibt ebenfalls unverändert.

Infolgedessen bleiben folglich auch die Verhältnisse des Massenträgheitsmoments der Nutzmasse zum Massenträgheitsmoments der Gegenmasse wie auch des Gewichts der Nutzmasse zum Gewicht der Gegenmasse trotz Wechsels des Topfes konstant. Mithin gelten folgende Zusammenhänge:
M_{N} = M_{NA} +M_{NT} = const.
M_{G} = const.
M_{N} : M_{G} = const., mit M_{N} : M_{G} ≥ 1
G_{N} = G_{NA} +G_{NT} = const.
G_{G} = const.
G_{N} : G_{G} = const., mit G_{N} : G_{G} = 1
wobei bedeuten:
- M_{N} =: Massenträgheitsmoment Nutzmasse
- M_{NA} =: Massenträgheitsmoment Nutzmasse-Antriebseinheit
- M_{NT} =: Massenträgheitsmoment Nutzmasse-Topf
- M_{G} =: Massenträgheitsmoment Gegenmasse
- G_{N} =: Gewicht Nutzmasse
- G_{NA} =: Gewicht Nutzmasse-Antriebseinheit
- G_{NT} =: Gewicht Nutzmasse-Topf
- G_{G} =: Gewicht Gegenmasse

Wie beschrieben setzen sich die jeweiligen Massen im Wesentlichen aus den genannten Bauelementen zusammen. Dabei bleibt das Massenträgheitsmoment der Nutzmasse der Antriebseinheit M_{NA} wie auch das Gewicht dieses Nutzmassenteils G_{NA} konstant, nachdem im Bereich der Antriebseinheit auch beim Topfwechsel keinerlei Änderungen vorgenommen werden. Das heißt, M_{NA} und G_{NA} = const. Faktisch weist damit jeder innerhalb des Systems einsetzbare Topf das gleiche Massenträgheitsmoment M_{NT} wie auch das Topfgewicht G_{NT} auf.

Wie beschrieben ist die Antriebseinheit 2 ein werkseitig standardisiertes Bauteil, an dem im Betrieb keinerlei weiteren Abgleiche und Einstellungen vorzunehmen sind, was im Hinblick auf die erfindungsgemäße Topfauslegung auch nicht erforderlich ist. Um für einen optimalen Schwingbetrieb zu sorgen, sollte die Resonanzfrequenz der oszillierenden Drehschwingbewegung der Nutzmasse und der Gegenmasse im Bereich der Betriebsfrequenz der Versorgungsspannung liegen. Zu diesem Zweck sind die Massenträgheitsmomente der Nutzmasse und der Gegenmasse entsprechend unter Berücksichtigung der Federeigenschaften der Federanordnungen 7, 8 ausgelegt und vorbestimmt.

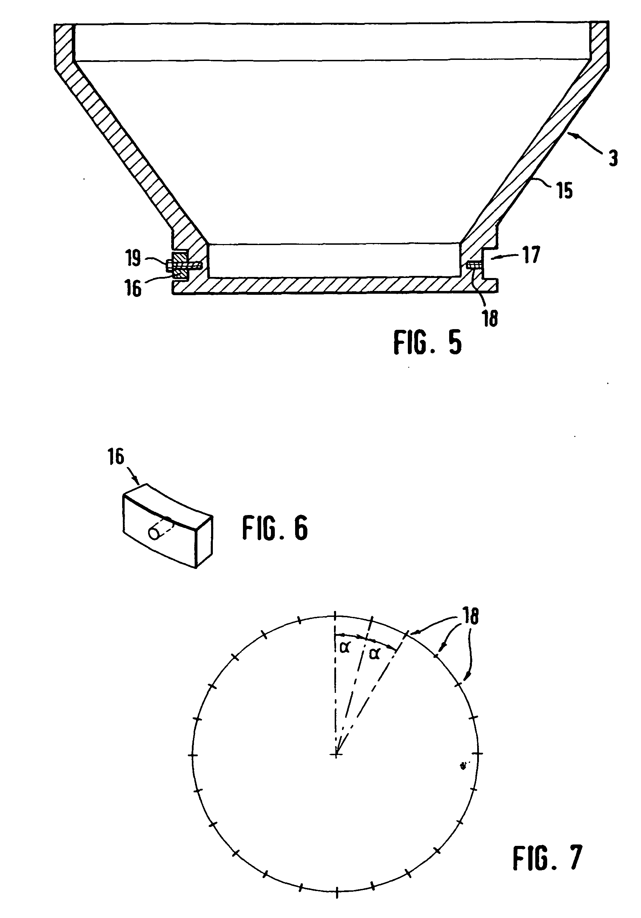

Wie beschrieben können unterschiedliche Töpfe an der Antriebseinheit 2 befestigt werden, die zur Förderung unterschiedlicher Gegenstände dienen. Das grundsätzliche Design der Töpfe unterscheidet sich nicht wesentlich, gleichwohl können aber die einzelnen Töpfe im Hinblick auf das Fördergut unterschiedliche Massenträgheitsmomente wie auch Gewichte aufweisen. Zum Ausgleich des Massenträgheitsmoments und letztlich auch zur Anpassung des Gewichts ist es möglich, an einem Topf 3 an seiner Außenseite 15 mehrere Ausgleichsgewichte 16 anzubringen. Hierzu ist eine Nut 17 vorgesehen, in der im gezeigten Ausführungsbeispiel mehrere mit einem Innengewinde versehene Bohrungen 18 vorgesehen sind, in die eine das Ausgleichsgewicht 16 haltende Schraube 19 eingeschraubt werden kann. Ein Ausgleichsgewicht 16 liegt wie Fig. 5 zeigt in der Nut, es besitzt ein vorbestimmtes Gewicht sowie eine definierte Form und Größe. Aufgrund der vorbestimmten radialen Position und wie auch des vorbestimmten Gewichts/Form/Größe kann durch Verwenden einer entsprechenden Anzahl von Gewichten der Ausgleich hinsichtlich des Moments bezogen auf das benötigte Topf-Massenträgheitsmoment M_{NT} wie auch das benötigte Topf-Gewicht G_{NT} erfolgen. Das Ausgleichsgewicht 16 ist im gezeigten Beispiel als Ringsegment ausgebildet, mehrere solcher Ringsegmente können zu einem Ring geschlossen werden.

Um eine große Variationsmöglichkeit hinsichtlich der Befestigung der Gewichte wie auch der verwendbaren Anzahl zu haben, ist beispielsweise eine Teilung der Bohrungen 18 wie in der Prinzipskizze gemäß Fig. 7 gezeigt denkbar, wobei die Bohrungen im gezeigten Beispiel um einen Winkel α = 15° voneinander beabstandet sind.

Alternativ zur gezeigten Schraubbefestigung ist es auch möglich, die Ausgleichsgewichte in der Nut zu verklemmen oder in dieser einzukleben oder dort fest zu schweißen, wobei die jeweilige Befestigung letztlich auch vom verwendeten Material des Topfes abhängt. Ein Ausgleichsgewicht kann aber nicht nur topfaußenseitig befestigt werden, es ist auch denkbar, unter den Topf eine Ausgleichsscheibe zu setzen. Letztendlich kann der Momenten- und sofern erforderlich auch der Massenausgleich auf beliebige Weise erfolgen, solange gewährleistet ist, dass der ausgeglichene Topf das benötigte Trägheitsmoment wie auch gegebenenfalls das benötigte Gewicht besitzt.

## Patentansprüche

1. Vibrationswendelförderer, bestehend aus einem Schwingsystem mit einer Nutzmasse und einer Gegenmasse, die über wenigstens eine Antriebseinrichtung in eine gegenläufige oszillierende Drehschwingbewegung um eine mittige Drehachse bringbar sind, wobei die Nutz- und die Gegenmasse über um die Drehachse verteilt angeordnete Federanordnungen an einem Basisteil bezüglich einander bewegbar gelagert sind, wobei Teil der Nutzmasse ein lösbar angeordneter, austauschbarer Topf ist, **dadurch gekennzeichnet, dass** die Massenträgheitsmomente (M_{N}, M_{G}) der Nutz- und der Gegenmasse in einem definierten Verhältnis zueinander stehen und im Austausch anbringbare Töpfe (3), die der Förderung unterschiedlicher Gegenstände dienen, derart ausgelegt sind, dass das Massenträgheitsmoment (M_{N}) der Nutzmasse und damit das Verhältnis der Massenträgheitsmomente (M_{N}, M_{G}) im Wesentlichen unverändert bleibt.

2. Vibrationswendelförderer nach Anspruch 1, **dadurch gekennzeichnet, dass** die Massenträgheitsmomente (M_{N}, M_{G}) im Wesentlichen gleich sind, oder dass das Massenträgheitsmoment (M_{N}) der Nutzmasse größer als das der Gegenmasse ist.

3. Vibrationswendelförderer nach Anspruch 1 oder 2, **dadurch gekennzeichnet, dass** auch die Gewichte (G_{N}, G_{G}) der Nutz- und der Gegenmasse im Wesentlichen gleich sind und ein im Austausch anbringbarer Topf (3) derart ausgelegt ist, dass das Gewicht der Nutzmasse im Wesentlichen unverändert bleibt.

4. Vibrationswendelförderer nach einem der vorangehenden Ansprüche, **dadurch gekennzeichnet, dass** eine standardisiertes Antriebseinheit (2) vorgesehen ist, umfassend ein Basisteil (4), ein mit dieser über Federanordnungen (7) gekoppeltes Gegenschwingteil (5) sowie ein mit ihr über Federanordnungen (8) gekoppeltes, mit dem Topf (3) bewegungsgekoppeltes Befestigungsteil (6), und die zwischen dem Gegenschwingteil (5) und dem Befestigungsteil (6) wirkende elektromagnetische Antriebseinrichtung (9) umfassend mehrere Antriebsmodule (10), von denen je ein erstes Antriebsteil (11) an dem Gegenschwingteil (5) und ein zweites Antriebsteil (12) an dem Befestigungsteil (6) angeordnet ist, wobei das Befestigungsteil (6) und das zweite Antriebsteil (12) Teil der Nutzmasse sind, und das Gegenschwingteil (5) und das erste Antriebsteil (11) im Wesentlichen die Gegenmasse bilden.

5. Vibrationswendelförderer nach einem der vorangehenden Ansprüche, **dadurch gekennzeichnet, dass** die jeweiligen Massenträgheitsmomente (M_{N}, M_{G}) unter Berücksichtigung der Eigenschaften der Federanordnungen (7, 8) derart gewählt sind, dass die Resonanzfrequenz der oszillierenden Drehschwingbewegung gleich oder größer als die Betriebsfrequenz der die vorzugsweise elektromagnetische Antriebseinrichtung (9) treibenden Versorgungsspannung ist.

6. Vibrationswendelförderer nach einem der vorangehenden Ansprüche, **dadurch gekennzeichnet, dass** zur Einstellung des topfeigenen Massenträgheitsmoments (M_{NT}) und/oder des Topfgewichts (G_{NT}) für eine Anpassung an das fixe Massenträgheitsmoment (M_{N}) und/oder Gewicht (M_{G}) der Nutzmasse am Topf (3) ein oder mehrere Ausgleichsgewichte (16) angebracht oder anbringbar sind.

7. Vibrationswendelförderer nach Anspruch 6, **dadurch gekennzeichnet, dass** an der Topfaußenseite (15) eine oder mehrere Aufnahme (17, 18) vorgesehen sind, an oder in denen das oder die Ausgleichsgewichte (16) angebracht oder anbringbar sind.

8. Vibrationswendelförderer nach Anspruch 7, **dadurch gekennzeichnet, dass** eine Aufnahme als umlaufende Nut (17) ausgebildet ist.

9. Vibrationswendelförderer nach Anspruch 7 oder 8, **dadurch gekennzeichnet, dass** ein Ausgleichsgewicht (16) als der Form der Topfaußenseite (15) angepasstes Ringsegment ausgebildet ist.

10. Vibrationswendelförderer nach einem der Anspruche 6 bis 9, **dadurch gekennzeichnet, dass** die Ausgleichsgewichte (16) über eine Schraub- oder Klemmverbindung, eine Klebeverbindung oder eine Schweiß- oder Lötverbindung gehaltert oder halterbar sind.

11. Vibrationswendelförderer nach einem der Ansprüche 1 bis 5, **dadurch gekennzeichnet, dass** die Einstellung des topfeigenen Massenträgheitsmoments (M_{NT}) und/oder des Topfgewichts (M_{GT}) für eine Anpassung an das fixe Massenträgheitsmoment (M_{N}) und/oder Gewicht (G_{N}) der Nutzmasse über einen Materialabtrag vom oder einen Materialauftrag auf den Topf (3) realisiert ist.

## Claims

1. Spiral vibratory conveyor, consisting of an oscillation system with a usable mass and a counter-mass, which may be brought into contrary oscillatory rotary motion about a central axis of rotation, the usable mass and counter-mass being mounted movably relative to one another on a base part via spring devices distributed about the axis of rotation, part of the usable mass being a detachably mounted exchangeable pot, **characterised in that** the mass moments of inertia (M_{N}, M_{G}) of the usable mass and of the counter-mass have a definite ratio to one another and pots (3) which may be mounted in exchange and which are used to convey different objects are so contrived that the mass moment of inertia (M_{N}) of the usable mass and hence the ratio of the mass moments of inertia (M_{N}, M_{G}) remains substantially unchanged.

2. Spiral vibratory conveyor according to claim 1, **characterised in that** the mass moments of inertia (M_{N}, M_{G}) are substantially equal, or that the mass moment of inertia (M_{N}) of the usable mass is greater than that of the counter-mass.

3. Spiral vibratory conveyor according to claim 1 or 2, **characterised in that** the weights (G_{N}, G_{G}) of the usable mass and counter-mass are substantially equal and a pot (3) mountable in exchange is so contrived that the weight of the usable mass remains substantially unchanged.

4. Spiral vibratory conveyor according to one of the preceding claims, **characterised in that** a standard drive unit (2) is provided, comprising a base part (4), a counter-oscillating part (5) coupled thereto via spring devices (7), and a fixing part (6) coupled thereto via spring devices (8) and coupled in motion to the pot (3), and the electromagnetic drive mechanism (9) operating between the counter-oscillation part (5) and the fixing part (6) and comprising plural drive modules (10), of which a first drive part (11) in each case is disposed on the counter-oscillation part (5) and a second drive part (12) is disposed on the fixing part (6), the fixing part (6) and the second drive part (12) being part of the usable mass, and the counter-oscillation part (5) and the first drive part (11) substantially form the counter-mass.

5. Spiral vibratory conveyor according to one of the preceding claims, **characterised in that** the respective mass moments of inertia (M_{N}, M_{G}) are selected taking into account the properties of the spring devices (7, 8), in such a manner that the resonant frequency of the oscillating rotary vibratory motion is equal to or greater than the operating frequency of the supply voltage driving the preferably electromagnetic drive mechanism (9).

6. Spiral vibratory conveyor according to one of the preceding claims, **characterised in that** in order to set the mass moment of inertia (M_{NT}) for each particular pot and/or the pot weight (G_{NT}) in order to adapt to the fixed mass moment of inertia (M_{N}) and/or weight (M_{G}) of the usable mass of the pot (3), one or more balancing weights (16) are mounted or are mountable.

7. Spiral vibratory conveyor according to claim 6, **characterised in that** on the pot exterior (15) one or more seats (17, 18) are provided, on which or in which the balancing weight(s) (16) is or are mounted or mountable.

8. Spiral vibratory conveyor according to claim 7, **characterised in that** one seat is formed as a continuous groove (17).

9. Spiral vibratory conveyor according to claim 7 or 8, **characterised in that** one balancing weight (16) is formed as a segment of a ring adapted to the shape of the pot exterior (15).

10. Spiral vibratory conveyor according to one of claims 6 to 9, **characterised in that** the balancing weights (16) are mounted or mountable via a screw or grip fixing, an adhesive joint or a welded or soldered joint.

11. Spiral vibratory conveyor according to one of claims 1 to 5, **characterised in that** the setting of the mass moment of inertia (M_{NT}) of the particular pot and/or of the pot weight (M_{GT}) is realised for adaptation to the fixed mass moment of inertia (M_{N}) and/or weight (G_{N}) of the usable mass by removing material from or adding material to the pot (3).

## Revendications

1. Convoyeur hélicoïdal à vibrations, comprenant un système vibrant avec une masse utile et une contre-masse, qui peuvent être amenées au moyen d'au moins un système d'entraînement dans un mouvement de vibration et de rotation oscillant contraire autour d'un axe de rotation central, la masse utile et la contre-masse étant montées de façon mobile l'une par rapport à l'autre sur une partie de base au moyen d'agencements à ressort répartis autour de l'axe de rotation, une partie de la masse utile étant un pot remplaçable et disposé de façon amovible, **caractérisé en ce que** les couples d'inertie de masses (M_{N}, M_{G}) de la masse utile et de la contre-masse sont dans un rapport défini et des pots (3) pouvant être placés en échange, qui servent au transport de différents objets, sont conçus de telle sorte que le couple d'inertie de masse (M_{N}) de la masse utile et donc le rapport des couples d'inertie de masse (M_{N}, M_{G}) restent sensiblement inchangés.

2. Convoyeur hélicoïdal à vibrations selon la revendication 1, **caractérisé en ce que** les couples d'inertie de masse (M_{N}, M_{G}) sont sensiblement identiques ou **en ce que** le couple d'inertie de masse (M_{N}) de la masse utile est supérieur à celui de la contre-masse.

3. Convoyeur hélicoïdal à vibrations selon la revendication 1 ou 2, **caractérisé en ce que** également les poids (G_{N}, G_{G}) de la masse utile et de la contre-masse sont sensiblement identiques et un pot (3) pouvant être amené en échange est conçu de telle sorte que le poids de la masse utile reste sensiblement inchangé.

4. Convoyeur hélicoïdal à vibrations selon l'une quelconque des revendications précédentes, **caractérisé en ce qu'**une unité d'entraînement (2) standardisée est prévue, comprenant une partie de base (4), une partie oscillant dans le sens opposé (5), couplée à cette unité au moyen d'agencements à ressort (7), et une partie de fixation (6) couplée à cette unité au moyen d'agencements à ressort (8) et couplée au niveau du mouvement avec le pot (3), et le dispositif d'entraînement (9) électromagnétique, agissant entre la partie oscillant dans le sens opposé (5) et la partie de fixation (6), comprenant plusieurs modules d'entraînement (10), dont respectivement une première partie d'entraînement (11) est disposée sur la partie oscillant dans le sens contraire (5) et une seconde partie d'entraînement (12) sur la partie de fixation (6), la partie de fixation (6) et la seconde partie d'entraînement (12) faisant partie de la masse utile, et la partie oscillant dans le sens opposé (5) et la première partie d'entraînement (11) formant sensiblement la contre-masse.

5. Convoyeur hélicoïdal à vibrations selon l'une quelconque des revendications précédentes, **caractérisé en ce que** les couples d'inertie de masse (M_{N}, M_{G}) respectifs sont choisis en tenant compte des propriétés des agencements à ressort (7, 8) de telle sorte que la fréquence de résonance du mouvement de rotation et de vibration oscillant est identique ou supérieure à la fréquence de service de la tension d'alimentation entraînant le dispositif d'entraînement (9) de préférence électromagnétique.

6. Convoyeur hélicoïdal à vibrations selon l'une quelconque des revendications précédentes, **caractérisé en ce que**, pour le réglage du couple d'inertie de masse (M_{NT}) propre au pot et/ou du poids du pot (G_{NT}) et pour une adaptation au couple d'inertie de masse (M_{N}) et/ou poids (M_{G}) fixe(s) de la masse utile, un ou plusieurs poids d'équilibrage (16) est/sont placé(s) ou peut/peuvent être placé(s) sur le pot (3).

7. Convoyeur hélicoïdal à vibrations selon la revendication 6, **caractérisé en ce que** sur le côté extérieur du pot (15) est/sont prévu(s) un ou plusieurs logements (17, 18), sur lequel/lesquels ou dans lequel/lesquels le ou les poids d'équilibrage (16) peut/peuvent être placé(s).

8. Convoyeur hélicoïdal à vibrations selon la revendication 7, **caractérisé en ce qu'**un logement est réalisé sous la forme d'une rainure (17) périphérique.

9. Convoyeur hélicoïdal à vibrations selon la revendication 7 ou 8, **caractérisé en ce qu'**un poids d'équilibrage (16) est réalisé sous la forme de segment annulaire adapté à la forme du côté extérieur du pot (15).

10. Convoyeur hélicoïdal à vibrations selon l'une quelconque des revendications 6 à 9, **caractérisé en ce que** les poids d'équilibrage (16) sont fixés ou peuvent être fixés au moyen d'une liaison par vissage ou serrage, une liaison collée ou une liaison soudée ou brasée.

11. Convoyeur hélicoïdal à vibrations selon l'une quelconque des revendications 1 à 5, **caractérisé en ce que** l'ajustage du couple d'inertie de masse (M_{NT}) propre au pot et/ou du poids du pot (M_{GT}) est réalisé pour une adaptation au couple d'inertie de masse (M_{N}) et/ou au poids (G_{N}) fixe(s) de la masse utile au moyen d'un enlèvement de matériau du pot (3) ou d'une application de matériau sur le pot.
